# EUROPÄISCHE PATENTANMELDUNG

(11) **EP 4 485 760 A1**
(43) Veröffentlichungstag der Anmeldung: **01.01.2025**
(21) Anmeldenummer: 24183658.4
(22) Anmeldetag: 21.06.2024
(51) Int. Cl.: H02K 5/04, H02K 5/20, H02K 15/14, H02K 1/18

(54) **ELEKTROMASCHINE MIT STATORHÜLSEN-VERDREHSICHERUNG**

(30) Priorität: 30.06.2023 DE 102023117322
(71) Anmelder: Audi AG, 85045 Ingolstadt (DE); VOLKSWAGEN AG, 38440 Wolfsburg (DE)
(72) Erfinder: Schroeder, Thomas, 12307 Berlin (DE); Mueller, Frank, 38165 Essenrode (DE); Röthlingshöfer, Frank, 85055 Ingolstadt (DE)
(74) Vertreter: Bierschneider, Walter

(57) **Zusammenfassung**

Die Erfindung betrifft eine Elektromaschine mit einer aus einer Statorhülse (17) und aus einem Statorblechpaket (15) gebildeten Baugruppe, in der die Statorhülse (17) verdrehsicher in ein hohlzylindrisches Elektromaschinengehäuse (1) eingesetzt ist. Erfindungsgemäß ist die Statorhülse (17) mit zumindest einem Sicherungselement (27) in Axialrichtung verlängert. Das Sicherungselement (27) ist mit einer gehäuseseitigen Gegenkontur (31) in Formschlußverbindung, wodurch eine Verdrehsicherung der Statorhülse (17) zum Elektromaschinengehäuse (1) bereitgestellt ist.

## Beschreibung

Die Erfindung betrifft eine Elektromaschine nach dem Oberbegriff des Anspruches 1.

Bei einer Elektromaschine kann der Stator entweder in direkter Montage in ein hohlzylindrisches Elektromaschinengehäuse eingesetzt werden, oder alternativ ein zweistufiger Montageprozess erfolgen, bei dem in einem ersten Montageschritt ein Statorblechpaket in eine Statorhülse eingepresst wird und in einem anschließenden zweiten Montageschritt die Baugruppe aus Statorhülse und darin eingepresstem Statorblechpaket in das Elektromaschinengehäuse montiert wird.

In einer gattungsgemäßen Elektromaschine ist die Baugruppe aus Statorhülse und Statorblechpaket verdrehsicher in ein hohlzylindrisches Elektromaschinengehäuse eingesetzt. Für eine verdrehsichere Positionierung der Baugruppe aus Statorhülse und Statorblechpaket in dem Elektromaschinengehäuse kann beispielhaft die Statorhülse in das Elektromaschinengehäuse verpresst sein, damit verschweißt sein oder alternativ damit verschraubt sein. Eine derart realisierte Verdrehsicherung ist jedoch im Stand der Technik mit übermäßig großem Bauraumaufwand verbunden. Zudem ist folgender Sachverhalt zu berücksichtigen: Die Statorhülse wird durch das Einpressen des Statorblechpakets verformt. Die zwischen Statorhülse und Elektromaschinengehäuse befindliche Verdrehsicherung muss daher konstruktiv aufwändig so ausgelegt sein, dass Toleranzen aufgrund der Statorhülsen-Verformung ausgleichbar sind.

Aus der DE 10 2020 114 748 A1 ist eine Elektromaschine mit gehäuseseitiger Anbindung eines Stators bekannt. Das Statorblechpaket ist dabei über mehrere Schrauben zu seiner axialen Seite an einem ersten Lagerschild des Elektromaschinengehäuses befestigt. Aus der DE 10 2021 122 580 A1 ist ein Verfahren zur Herstellung eines Rotors mit axialem Sicherungskonzept bekannt. Aus der FR 3 072 223 B1 ist eine Elektromaschine bekannt. Deren Stator ist in einem Gehäuse angeordnet, das aus zwei Gehäuseteilen besteht, die durch Schrauben axial festgeklemmt sind.

Die Aufgabe der Erfindung besteht darin, eine Elektromaschine bereitzustellen, in der die Verdrehsicherung der Statorhülse im Elektromaschinengehäuse im Vergleich zum Stand der Technik konstruktiv einfach sowie mit ausreichend groß bemessenem Toleranzausgleich realisierbar ist.

Die Aufgabe ist durch die Merkmale des Anspruches 1 gelöst. Bevorzugte Weiterbildungen der Erfindung sind in den Unteransprüchen offenbart.

Die Erfindung geht von einer Elektromaschine mit einer zylinderförmigen Statorhülse aus, in der in einem Fügevorgang ein Statorblechpaket eingepresst ist. Die Baugruppe aus Statorhülse und Statorblechpaket ist verdrehsicher in ein hohlzylindrisches Elektromaschinengehäuse eingesetzt. Gemäß dem kennzeichnenden Teil des Anspruches 1 wird die Verdrehsicherung der Statorhülse zum Elektromaschinengehäuse wie folgt bereitgestellt: So ist die Statorhülse mit zumindest einem Sicherungselement in Axialrichtung verlängert. Das Sicherungselement überragt einen stirnseitigen Statorhülsen-Rand mit einer Axialhöhe. Im Zusammenbauzustand ist das Sicherungselement mit einer gehäuseseitigen Gegenkontur in Formschluß. Die erfindungsgemäße Verdrehsicherung ist somit in Axialflucht zur Statorhülse konstruktiv einfach sowie mit reduziertem Bauraumaufwand angeordnet. Insbesondere ist kein zusätzlicher Bauraum an der radial äußeren und/oder radial inneren Seite der Statorhülse erforderlich.

In einer technischen Umsetzung kann das Sicherungselement ein von der Statorhülse separates Bauteil sein, das an der Statorhülse anbindbar ist. Auf diese Weise kann die Statorhülse weitgehend in herkömmlicher Hülsen-Geometrie bereitstellbar sein, die lediglich zusätzlich eine Anbindungsstelle für das Sicherungselement bereitstellen muss. In einer konkreten Ausführungsvariante kann das Sicherungselement ein Schraubbolzen sein. Im Zusammenbauzustand ist der Schraubbolzen mit seinem Bolzenschaft in Schraubverbindung mit dem Elektromaschinengehäuse, um die Verdrehsicherung zu gewährleisten.

Eine im Hinblick auf die Verdrehsicherung sowie auf den erforderlichen Toleranzausgleich bevorzugte Schraubverbindung ist wie folgt gestaltet: So kann der Bolzenschaft einen zylindrischen Bolzen-Durchlass des Elektromaschinengehäuses durchragen und mit seiner Bolzenspitze in Gewindeeingriff mit einer gehäuseäußeren Schraubmutter sein.

Die Statorhülse kann beispielhaft aus einem Aluminiumwerkstoff gefertigt sein. Dessen Bauteilsteifigkeit ist im Vergleich zur Bauteilsteifigkeit des Statorblechpakets reduziert, so dass die Statorhülse durch das Einpressen des Statorblechpakets sich zwangsläufig der Außenkontur des Statorblechpakets anpasst und sich gegebenenfalls verformt. Aufgrund der Statorhülsen-Verformung kann die Positionierung und/oder die Ausrichtung des Schraubbolzens Bauteiltoleranzen unterworfen sein. Vor diesem Hintergrund ist es bevorzugt, wenn der Schraubbolzen mit einem ausreichend groß bemessenen Lochspiel durch den gehäuseseitigen Bolzen-Durchlass nach gehäuseaußen geführt ist. Das Lochspiel ist bevorzugt so bemessen, das toleranzbedingte Positionsabweichungen des Schraubbolzens ausgleichbar sind. Gegebenenfalls kann also der Schraubbolzen zum Toleranzausgleich außermittig durch den Bolzen-Durchlass geführt sein.

Im Hinblick auf eine feste Anbindung an der Statorhülse kann der Schraubbolzen einen im Vergleich zum Bolzenschaft querschnittsgroßen Bolzenkopf aufweisen, der an der Statorhülse anbindbar ist. Im Zusammenbauzustand kann somit der gehäuseseitige, zylindrische Bolzen-Durchlass zwischen der Schraubmutter und dem Bolzenkopf verspannt sein. In dem Zusammenbauzustand kann zudem der Bolzenkopf mit seiner Kopfauflagefläche in Axial-Druckanlage mit einem Öffnungsrandbereich des gehäuseseitigen Bolzen-Durchlasses sein.

Der Öffnungsrandbereich des gehäuseseitigen Bolzen-Durchlasses kann bei einer Montage der Statorhülse in dem Elektromaschinengehäuse als Bewegungsanschlag wie folgt wirken: Beim Montagevorgang wird die Baugruppe, bestehend aus der Statorhülse mit darin eingepresstem Statorblechpaket, in Axialrichtung in das Elektromaschinengehäuse eingefahren, und zwar bis die Kopfauflagefläche des Bolzenkopfes auf Block gegen den Öffnungsrandbereich des gehäuseseitigen Bolzen-Durchlasses in Anschlag kommt. In diesem Zustand durchragt der Schraubbolzen den gehäuseseitigen Bolzen-Durchlass nach außen, so dass dessen Schaftspitze mit der gehäuseäußeren Schraubmutter verschraubbar ist.

Für eine gesteigerte Verdrehsicherung kann der Bolzenkopf an seiner Kopfauflagefläche ein Verdrehschutzprofil aufweisen, zum Beispiel einen Steg oder dergleichen. Das Verdrehschutzprofil kann im Zusammenbauzustand in Materialeingriff mit dem zugewandten Öffnungsrandbereich des gehäuseseitigen Bolzen-Durchlasses kommen, das heißt in das Material des Elektromaschinengehäuses eingetrieben werden.

Der Bolzenkopf kann auf unterschiedliche Weise an der Statorhülse befestigt sein: In einer ersten Ausführungsvariante kann der Bolzenkopf ein Außengewinde aufweisen, das mit einem an der Statorhülse ausgebildeten Muttergewinde in Eingriff bringbar ist. In einer zweiten Ausführungsvariante kann anstelle einer solchen Schraubverbindung eine Pressverbindung realisiert sein, bei der der Bolzenkopf des Schraubbolzens in Axialrichtung in eine Ausnehmung der Statorhülse einpressbar ist. Eine solche Pressverbindung ist im Vergleich zu einer Schraubverbindung mit wesentlich reduzierterem Bauraumaufwand realisierbar: So kann die Ausnehmung der Statorhülse nicht als Sackloch oder dergleichen realisiert sein. Vielmehr kann die in Presspassung mit dem Bolzenkopf zusammenwirkende Ausnehmung ein nutförmiger Rücksprung sein, der in den Statorhülsen-Rand eingearbeitet ist. Der nutförmige Rücksprung kann mit seinem Nutboden um eine Nuttiefe vom Statorhülsen-Rand axial zurückgesetzt sein.

Bei einer besonders bauraumreduzierten Ausführungsvariante kann der im Statorhülsen-Rand eingearbeitete nutförmige Rücksprung sowohl nach radial innen als auch nach radial außen offen sein. In diesem Fall sind lediglich die vom Nutboden bis zum Statorhülsen-Rand hochgezogenen Nutflanken des nutförmigen Rücksprungs in Presspassung mit dem Bolzenkopf.

Der Bolzenkopf kann außerdem an seiner radial inneren und radial äußeren Seite - unter Bildung von Flachseiten - abgeflacht sein. Dadurch überragt der Bolzenkopf mit seinen beiden Flachseiten den nutförmigen Rücksprung in der Statorhülse nicht oder nur mit einem geringen Übermaß, wodurch Bauraum eingespart werden kann. Der Bolzenkopf kann ferner insbesondere an seinen Schmalseiten eine Rändelung aufweisen. Diese kann zusätzlich zur Presspassung in Materialeingriff mit den beiden Nutflanken des in dem Statorhülsen-Rand eingearbeiteten nutförmigen Rücksprungs bringbar sein.

Nachfolgend ist ein Ausführungsbeispiel der Erfindung anhand der beigefügten Figuren beschrieben. Es zeigen:

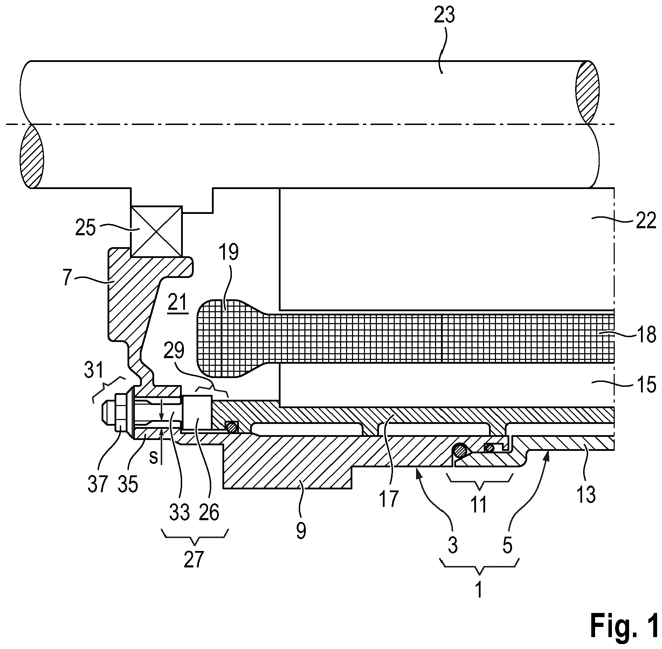

- Figuren 1 bis 7: jeweils Ansichten, anhand derer eine Verdrehsicherung der Statorhülse in einem Elektromaschinengehäuse veranschaulicht ist.

In der Figur 1 ist in einer Teilschnittansicht eine Elektromaschine im Zusammenbauzustand insoweit dargestellt, als es für das Verständnis der Erfindung erforderlich ist. Demnach weist die Elektromaschine ein zweiteiliges Elektromaschinengehäuse 1 aus zwei in etwa topfartig gebildeten Gehäuseteilen 3, 5 auf. Von den beiden Gehäuseteilen 3, 5 ist in der Figur 1 das linksseitige Gehäuseteil 3 aus einer Stirnwand 7 und einer daran anschließenden zylindrischen Umfangswand 9 gebildet. Die Umfangswand 9 geht an einer Flanschverbindung 11 in eine Umfangswand 13 des rechtsseitigen Gehäuseteils 5 über. Im hohlzylindrischen Elektromaschinengehäuse 1 ist ein Statorblechpaket 15 unter Zwischenordnung einer Statorhülse 17 positioniert. Das Statorblechpaket 15 ist mit einer nur schematisch angedeuteten Spulenwicklung 18 versehen, deren Wickelköpfe 19 in einen Wickelkopfraum 21 des Elektromaschinengehäuses 1 einragen, der sich axial zwischen der gehäuseseitigen Stirnwand 7 und der Stirnseite des Statorblechpakets 15 erstreckt. Das Statorblechpaket 15 wirkt mit einem Rotor 22 zusammen, dessen Rotorwelle 23 an einer Lagerstelle 25 der gehäuseseitigen Stirnwand 7 des linksseitigen Gehäuseteils 3 drehgelagert ist.

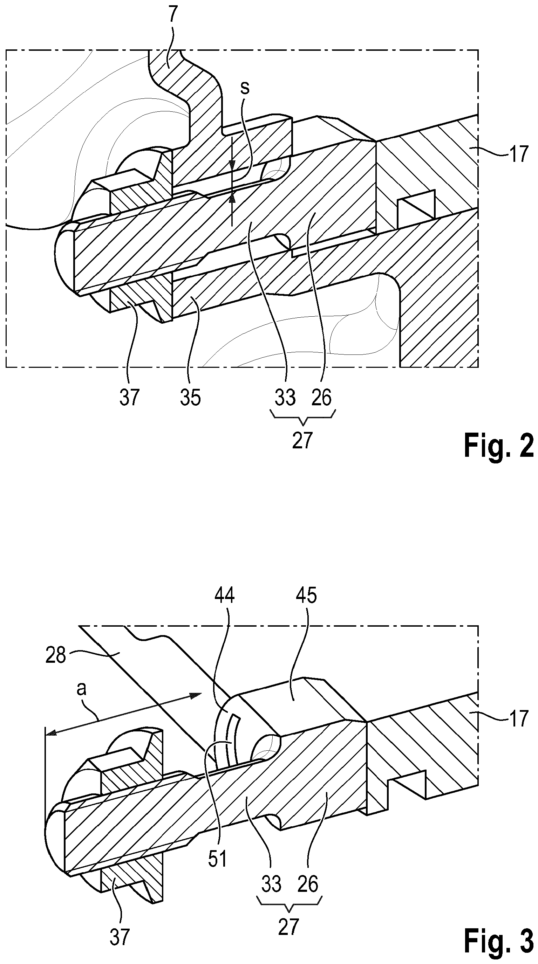

Wie aus der Figur 1 weiter hervorgeht, ist die Statorhülse 17 in Axialrichtung mit einem Schraubbolzen 27 verlängert, der mit seinem Bolzenkopf 26 durch Presspassung an einer Anbindungsstelle 29 des Statorhülsen-Rands 28 angebunden ist. Der Schraubbolzen 27 ist Bestandteil einer Verdrehsicherung der Statorhülse 17 zum Elektromaschinengehäuse 1. Zudem überragt der Schraubbolzen 27 den stirnseitigen Statorhülsen-Rand 28 um eine Axialhöhe a (Figur 3). In dem in der Figur 1 gezeigten Zusammenbauzustand ist der Schraubbolzen 27 mit einer gehäuseseitigen Gegenkontur 31 (Figur 1) in Formschlußverbindung, wodurch die Verdrehsicherung der Statorhülse 17 zum Elektromaschinengehäuse 1 gewährleistet ist.

In der Figur 1 oder 2 ist der Schraubbolzen 27 mit seinem Bolzenschaft 33 mit Lochspiel s durch einen gehäuseseitigen, hohlzylindrischen Bolzen-Durchlass 35 geführt. Dieser ist an der Stirnwand 7 des linksseitigen Gehäuseteils 3 angeformt. Die Bolzenspitze des Schraubbolzens 27 ist in Gewindeeingriff mit einer gehäuseäußeren Schraubmutter 37. Entsprechend ist der am Gehäuseteil 3 angeformte Bolzen-Durchlass 35 in Axialrichtung zwischen der Schraubmutter 37 und dem Bolzenkopf 26 des Schraubbolzens 27 verspannt.

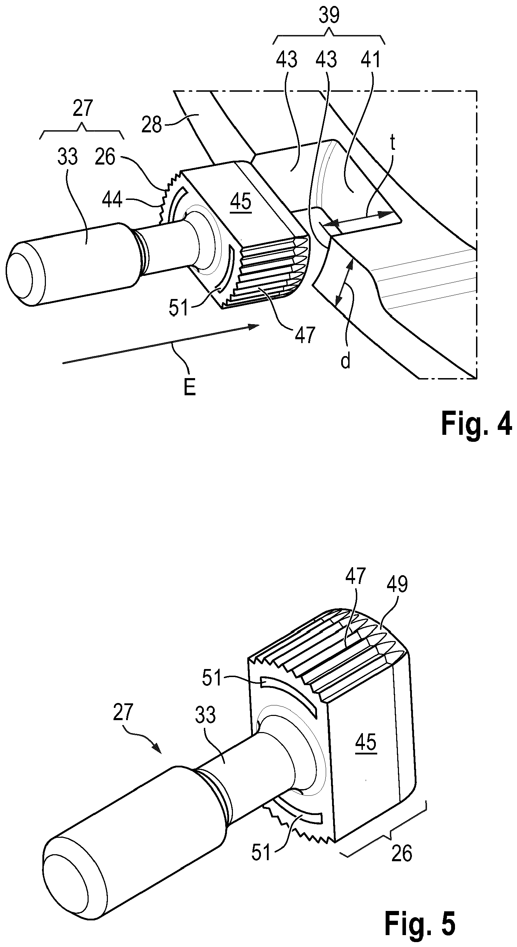

Aufgrund der beengten Bauraum-Verhältnisse im Elektromaschinengehäuse 1 muss die Verdrehsicherung möglichst bauraumgünstig realisiert sein. Vor diesem Hintergrund ist die Anbindungsstelle 29, an der der Bolzenkopf 35 an dem Statorhülsen-Rand 28 angebunden ist, im Hinblick auf eine Packageoptimierung wie folgt realisiert: Demnach ist der Bolzenkopf 26 in Axialrichtung in einer Ausnehmung 39 der Statorhülse 28 eingepresst. Die Ausnehmung 39 ist nicht als ein bauraumintensives Sackloch im Statorhülsen-Rand 28 eingearbeitet. Vielmehr ist die Ausnehmung 39 gemäß der Figur 4 als ein im Statorhülsen-Rand 28 ausgebildeter, nutförmiger Rücksprung realisiert. Dessen Nutboden 41 ist um eine Nuttiefe t vom Statorhülsen-Rand 28 axial zurückgesetzt.

Vom Nutboden 41 sind bis zum Statorhülsen-Rand 28 Nutflanken 43 axial hochgezogen. Im Bereich des nutförmigen Rücksprungs 39 ist die Materialstärke des Gehäuseteils 3 um ein Aufmaß d (Figur 4) aufgedickt. Zudem ist der nutförmige Rücksprung 39 nach radial innen sowie nach radial außen offen gestaltet, so dass lediglich die vom Nutboden 41 hochgezogenen Nutflanken 43 in Presspassung mit dem Bolzenkopf 26 kommen.

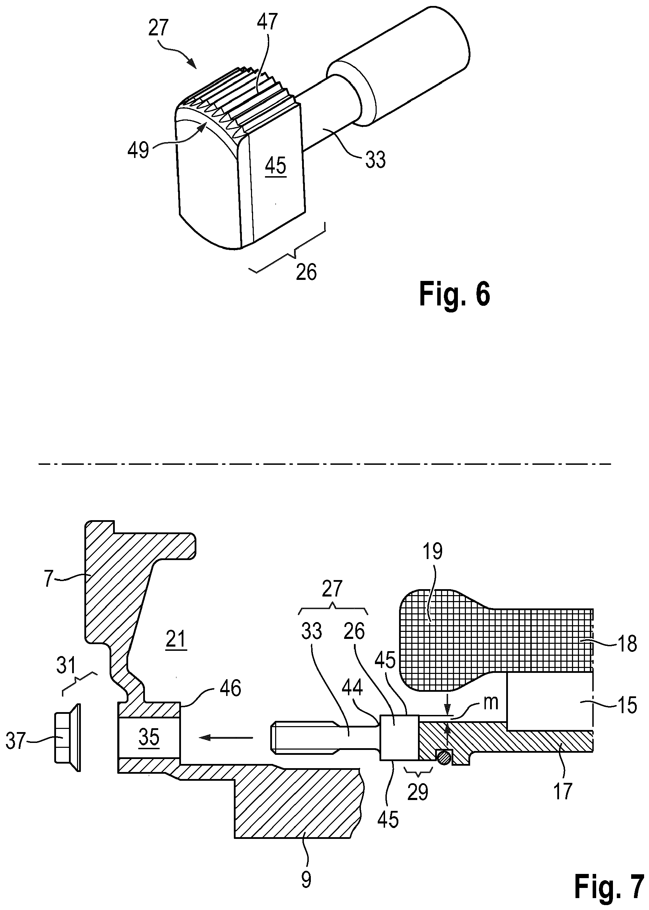

Der Bolzenkopf 26 ist ferner radial innen und radial außen jeweils unter Bildung von Flachseiten 45 abgeflacht, während der Bolzenkopf 26 lediglich mit seinen Schmalseiten 47 in Presskontakt mit den beiden Nutflanken 43 des nutförmigen Rücksprungs 39 der Statorhülse 28 bringbar ist. Aufgrund der beidseitigen Abflachung überragt der Bolzenkopf 26 den in der Statorhülse 17 ausgebildeten nutförmigen Rücksprung 39 bauraumgünstig nach radial innen und nach radial außen nicht oder nur mit einem geringem Übermaß m (Figur 7).

Zur weiteren Steigerung der Verbindungsfestigkeit zwischen dem Bolzenkopf 26 und der Statorhülse 17 weist der Bolzenkopf 26 an seinen beiden Schmalseiten 47 eine Rändelung auf, die in Materialeingriff mit den beiden Nutflanken 43 des nutförmigen Rücksprungs 39 bringbar ist. Die am Bolzenkopf 26 ausgebildete Rändelung geht in Richtung Bolzenkopf-Oberseite in einen querschnittsreduzierten Absatz 49 (Figuren 5 oder 6) über. Dieser begrenzt im Zusammenbauzustand zusammen mit dem Nutboden 41 des Rücksprungs 39 der Statorhülse 17 einen Zwischenraum, der als Spanfang dient.

Wie aus der Figur 5 weiter hervorgeht, weist der Bolzenkopf 26 an seiner, dem Öffnungsrandbereich 46 (nur in der Figur 7 gekennzeichnet) des Bolzenkopf-Durchlasses 35 zugewandten Kopfauflagefläche 44 ein Verdrehschutzprofil 51 auf, das als stegförmiger Vorsprung realisiert ist. Im Zusammenbauzustand ist der stegförmige Vorsprung 51 in Materialeingriff mit dem Öffnungsrandbereich 46 des zylindrischen Bolzen-Durchlasses 35.

Nachfolgend wird anhand der Figur 7 eine Prozessabfolge zur Montage der Elektromaschine beschrieben: Demnach erfolgt zunächst ein Einpressvorgang, bei dem das Statorblechpaket 15 in die Statorhülse 17 eingepresst wird. Vor diesem Fügevorgang oder danach wird der Schraubbolzen 27 mit seinem Bolzenkopf 26 in den nutförmigen Rücksprung 39 des Statorhülsen-Rands 28 eingepresst. Danach folgt ein weiterer Fügevorgang, bei dem die Baugruppe aus Statorhülse 17 und Statorblechpaket 15 in Pfeilrichtung in das linksseitige Gehäuseteil 3 eingefahren wird, und zwar bis die Kopfauflagefläche 44 des Bolzenkopfes 26 auf Block gegen den Öffnungsrandbereich 46 des gehäuseseitigen Bolzen-Durchlasses 35 in Anschlag kommt. Bei diesem Einfahrvorgang wird gleichzeitig auch der Schraubbolzen 27 mit seinem Bolzenschaft 33 durch den gehäuseseitigen Bolzen-Durchlass 35 nach außen geführt.

Es ist zu beachten, dass die Statorhülse 17 durch das Einpressen des Statorblechpakets 15 deformiert wird, wodurch die Positionierung und/oder die Ausrichtung des Schraubbolzens 27 Toleranzen unterworfen sind. Entsprechend ist das Lochspiel s zwischen Bolzen-Durchlass 35 und Schraubbolzen 27 ausreichend groß bemessen, um solche Toleranzen ohne Weiteres ausgleichen zu können. Der Schraubbolzen 27 kann also zum Toleranzausgleich zum Beispiel außermittig durch den gehäuseseitigen Bolzen-Durchlass 35 geführt sein.

Anschließend wird die Schraubmutter 37 mit der Bolzenspitze des Schraubbolzens 27 verschraubt, wodurch der gehäuseseitige Bolzen-Durchlass 35 zwischen der Schraubmutter 37 und dem Bolzenkopf 26 verspannt ist.

### Bezugszeichenliste

- 1: Elektromaschinengehäuse
- 3, 5: Gehäuseteile
- 7: Stirnwand
- 9: Umfangswand
- 11: Flanschverbindung
- 13: Umfangswand
- 15: Statorblechpaket
- 17: Statorhülse
- 18: Spulenwicklung
- 19: Wickelköpfe
- 21: Wickelkopfraum
- 23: Rotorwelle
- 25: Lagerstelle
- 26: Bolzenkopf
- 27: Schraubbolzen
- 28: Statorhülsen-Rand
- 29: Anbindungsstelle
- 31: Gegenkontur
- 33: Bolzenschaft
- 35: Bolzen-Durchlass
- 37: Schraubmutter
- 39: nutförmiger Rücksprung
- 41: Nutboden
- 43: Nutflanken
- 44: Kopfauflagefläche
- 45: Flachseiten
- 46: Öffnungsrandbereich
- 47: Schmalseiten
- 49: querschnittsreduzierter Absatz
- 51: Verdrehschutzprofil
- a: Axialhöhe
- t: Nuttiefe
- d: Aufmaß
- s: Lochspiel
- m: radiales Übermaß

## Patentansprüche

1. Elektromaschine mit einer aus einer Statorhülse (17) und aus einem Statorblechpaket (15) gebildeten Baugruppe, in der die Statorhülse (17) verdrehsicher in ein hohlzylindrisches Elektromaschinengehäuse (1) eingesetzt ist, **dadurch gekennzeichnet, dass** die Statorhülse (17) mit zumindest einem Sicherungselement (27) in Axialrichtung verlängert ist, das insbesondere einen stirnseitigen Statorhülsen-Rand (28) mit einer Axialhöhe (a) überragt, und dass das Sicherungselement (27) mit einer gehäuseseitigen Gegenkontur (31) in Formschlußverbindung ist, wodurch eine Verdrehsicherung der Statorhülse (17) zum Elektromaschinengehäuse (1) bereitgestellt ist.

2. Elektromaschine nach Anspruch 1, **dadurch gekennzeichnet, dass** das Sicherungselement (27) ein von der Statorhülse (17) separates Bauteil ist, das an der Statorhülse (17) anbindbar ist, und/oder dass das Sicherungselement (27) ein Schraubbolzen ist, der im Zusammenbauzustand mit seinem Bolzenschaft (33) in Schraubverbindung mit dem Elektromaschinengehäuse (1) ist.

3. Elektromaschine nach Anspruch 2, **dadurch gekennzeichnet, dass** der Bolzenschaft (33) des Schraubbolzens (27) einen zylindrischen Bolzen-Durchlass (35) des Elektromaschinengehäuses (1) durchragt und mit seiner Bolzenspitze in Gewindeeingriff mit einer gehäuseäußeren Schraubmutter (37) ist.

4. Elektromaschine nach Anspruch 3, **dadurch gekennzeichnet, dass** die Statorhülse (17) durch das Einpressen des Statorblechpakets (15) deformierbar ist, wodurch die Positionierung und/oder Ausrichtung des Schraubbolzens (27) Toleranzen unterworfen ist, und/oder dass insbesondere der Schraubbolzen (27) mit Lochspiel (s) durch den gehäuseseitigen Bolzen-Durchlass (35) geführt ist, und dass insbesondere das Lochspiel (s) für einen zum Toleranzausgleich ausreichend groß bemessen ist.

5. Elektromaschine nach einem der Ansprüche 2 bis 4, **dadurch gekennzeichnet, dass** der Schraubbolzen (27) einen Bolzenkopf (26) aufweist, der an der Statorhülse (17) anbindbar ist, und dass insbesondere im Zusammenbauzustand der gehäuseseitige Bolzen-Durchlass (35) zwischen der Schraubmutter (37) und dem Bolzenkopf (26) verspannt ist.

6. Elektromaschine nach Anspruch 5, **dadurch gekennzeichnet, dass** im Zusammenbauzustand der Bolzenkopf (26) mit seiner Kopfauflagefläche (44) in Axial-Druckanlage mit einem Öffnungsrandbereich (46) des Bolzen-Durchlasses (35) ist, und/oder dass insbesondere bei einem Montagevorgang die Statorhülse (17) mit darin eingepresstem Statorblechpaket (15) in Axialrichtung in das Elektromaschinengehäuse (1) einsetzbar ist, bis die Kopfauflagefläche (44) des Bolzenkopfes (26) auf Block gegen den Öffnungsrandbereich (46) des gehäuseseitigen Bolzen-Durchlasses (35) in Anschlag kommt.

7. Elektromaschine nach Anspruch 6, **dadurch gekennzeichnet, dass** der Bolzenkopf (26) an seiner Kopfauflagefläche (44) ein Verdrehschutzprofil (51) aufweist, das im Zusammenbauzustand in Materialeingriff mit dem Öffnungsrandbereich (46) des gehäuseseitigen Bolzen-Durchlasses (35) bringbar ist.

8. Elektromaschine nach einem der Ansprüche 5 bis 7, **dadurch gekennzeichnet, dass** der Bolzenkopf (26) ein Außengewinde aufweist, das mit einem Muttergewinde der Statorhülse (17) in Gewindeeingriff bringbar ist, oder dass der Bolzenkopf (26) in Axialrichtung in eine Ausnehmung (39) der Statorhülse (17) einpressbar ist.

9. Elektromaschine nach Anspruch 8, **dadurch gekennzeichnet, dass** die Ausnehmung (39) der Statorhülse (17) ein im Statorhülsen-Rand (28) eingearbeiteter nutförmiger Rücksprung ist, und dass der Nutboden (41) des nutförmigen Rücksprungs (39) um eine Nuttiefe (t) vom Statorhülsen-Rand (28) zurückgesetzt ist.

10. Elektromaschine nach Anspruch 9, **dadurch gekennzeichnet, dass** der nutförmige Rücksprung (39) nach radial innen und radial außen offen ist, so dass lediglich die vom Nutboden (41) bis zum Statorhülsen-Rand (28) hochgezogenen Nutflanken (43) des nutförmigen Rücksprungs (39) in Presspassung mit dem Bolzenkopf (26) bringbar sind, und/oder dass der Bolzenkopf (26) an seiner radial inneren und äußeren Seite (45) abgeflacht ist, so dass der Bolzenkopf (26) nicht oder nur mit geringem Übermaß den nutförmigen Rücksprung (39) der Statorhülse (17) radial überragt, und/oder dass der Bolzenkopf (26), insbesondere an seinen Schmalseiten (47), eine Rändelung aufweist, die in Materialeingriff mit den Nutflanken (43) des nutförmigen Rücksprungs (39) bringbar ist.
